# EUROPEAN PATENT SPECIFICATION

(11) **EP 2 411 217 B1**
(45) Date of publication and mention of the grant of the patent: **22.01.2020**
(21) Application number: 10756477.5
(22) Date of filing: 23.03.2010
(51) Int. Cl.: B32B 27/06, B32B 7/12, B32B 15/08, B32B 27/08, B32B 27/30, B32B 27/36, B32B 3/26, B32B 3/28, G03H 1/02, G03H 1/00

(54) **PRECIOUS METAL THIN-FILM LAMINATE (PMTL)**
DÜNNSCHICHTLAMINAT AUS EDELMETALL
STRATIFIÉ DE MINCES PELLICULES DE MÉTAL PRÉCIEUX (PMTL)

(30) Priority: 23.03.2009 US 210792 P; 22.04.2009 US 214334 P
(43) Date of publication of application: 01.02.2012
(73) Proprietor: Johansen, Laurie, Santa Rosa, CA 95409 (US); Diffendaffer, Paul A., Santa Rosa, CA 95409 (US)
(72) Inventor: Johansen, Laurie, Santa Rosa, CA 95409 (US); Diffendaffer, Paul A., Santa Rosa, CA 95409 (US)
(74) Representative: Cabinet Chaillot
(86) International application number: PCT/US2010/000873
(87) International publication number: WO 2010/110883

(56) References cited:
- US-A- 188 923
- US-A- 310 222
- US-A- 2 384 667
- US-A- 4 400 577
- US-A1- 2001 012 600
- US-A1- 2002 025 441
- US-A1- 2005 072 520
- US-A1- 2007 224 350
- US-A1- 2007 281 177
- US-A1- 2008 037 131
- US-A1- 2009 025 595
- US-B2- 6 909 547

## Description

### TECHNICAL FIELD

The invention generally pertains to monetary negotiable instruments, and more particularly to a structure and methods for manufacturing and using a value-bearing instrument that is in the form of a laminated structure which includes a precious metal located between a substrate and a protective layer.

### BACKGROUND ART

The visual attractiveness and chemical resistance of gold and other precious metals allow them to be used in creating objects of beauty and durability. Gold has been used in the creation of collectibles and memorabilia in many forms.

Gold and other precious metals have been used as collectibles for centuries. Their value is primarily set by the free market, and as such it is largely independent of any nation's fiscal and monetary policies. Gold and other metals have the advantage that their value is relatively independent of political influences and therefore not as subject to government caused inflation.

Precious metals can be used as a medium of exchange, a collectible object of art, an accounting unit, and a store of value. Coins are examples of artistic forms of precious metals currently in use. Irregular and unpredictable amounts of gold leaf have also been used in artistic objects.

Gold does however have the disadvantage of being inconvenient both for commerce and for art. It is so valuable that it is not commonly found in daily commerce or artwork, except in relatively large amounts of a gram or more in jewelry. More often it is used as an inflation resistant store of wealth, but seldom used to buy goods or services. Smaller amounts of gold are needed for use in artwork for commerce. However, smaller amounts of gold, such as "chip" gold, are hard to see and are easier to counterfeit.

Furthermore, by spreading out gold into a thin layer, it is easier to observe and measure the unique physical properties of gold. Thus the inventive thin film gold is resistant to adulteration and counterfeiting. Thin films of metal behave very differently in terms of spectra, corrosion and other physical properties. We can probe or interrogate thin film metals with the full range of the electromagnetic spectrum. Thus thin film is a superior form of gold for authentication.

The inventive layered precious metal structure provides precious metals in a new form that overcomes this problem. This inventive thin film form of gold is more liquid, portable, verifiable, and convenient than forms of gold that have previously existed. This flat, thin, durable form of gold may allow gold to be used for collectible artwork more efficiently.

A search of the prior art did not disclose any literature or patents that read directly on the claims of the instant invention however, the following U.S. patents are considered related:

| **PATENT NO.** | **INVENTOR** | **ISSUED** |
|---|---|---|
| WO2007011259 | Leonidovich(RU) et al | 25Jan. 2007 |
| Pub. US2005/0072520 | Berman | 7 April 2005 |
| CN1350260 | Sun | 22 May 2002 |
| U.S. 5,671,364 | Turk | 23 Sept. 1997 |
| CN201242832 | Jianxin | 20 May 2009 |
| CN201022027 | Yueting | 13 Feb. 2008 |
| CN200993847 | Zhengzhang | 19 Dec. 2007 |
| WO2004070667 | Biermann | 19 Aug. 2004 |
| RU2202127 | Chehn | 10 April 2003 |
| CN1378376 | Sun | 06 Nov. 2002 |
| CN247688 | Zhang | 31 Oct. 2001 |
| CN1244698 | Tian | 16 Feb. 2000 |

### DISCLOSURE OF INVENTION

In at least one embodiment, the precious metal thin film laminate (PMTL) in its basic design, is comprised of:
a) a substrate having an upper surface and a lower surface,
b) a selectable quantity of a precious metal that is deposited onto the upper surface or the lower surface of the substrate, and
c) a protective layer that is applied over the precious metal.

To further enhance the utility of the invention, the PMTL includes indicia that is applied to the precious metal or over the substrate, and an authentication device that makes it difficult to counterfeit or adulterate the PMTL. The resulting product may be utilized as material for collectible art, traded, and purchased or sold by individuals and commercial enterprises.

The thin-film layer of precious metal used to produce the PMTL is selected from the group consisting of gold, platinum, palladium, and/or silver. It is possible that this invention may also be applied to ruthenium, rhodium, osmium and/or iridium. Hard precious metals such as rhodium or palladium would not need a protective film cover, but the other softer metals and softer alloys may need a protective film cover in certain embodiments. However, for brevity the invention disclosed is limited to a PMTL that utilizes a thin-film layer of gold that requires the use of a protective film.

In the past, gold has been used as a precious metal collectible in the form of bullion, coins and chip gold. The intrinsic problems of utilizing coins and chips as collectible gold art objects are overcome or at least minimized by the PMTL, which utilizes thin-film gold that:
- Is self-authenticating since gold does not require trust in either an authenticating agency or special expertise for physical property authentication,
- Produces a characteristic green color in transmission that can be viewed when the PTL is held up to sunlight or a light source. Even a small adulteration would result in a substantial change in the transmitted and or reflected color. For example, the use of dyes to create the unique transmission would be difficult, and would destroy the gold's reflective characteristics,
- Can include feathering at the edges of the PMTL. The feathering is a lateral reduction in layer thickness which produces a characteristic and distinctive spectral change with decreasing thickness that is nearly impossible to counterfeit,
- Is unique in its invisible spectral characteristics. It has a high infrared reflectivity and a characteristic ultraviolet (UV) spectrum by both reflection and transmission which can be measured by a simple hand-held instrument,
- Has a high electrical conductivity that can measured easily by a device that measures sheet conductivity,
- Will remain unscathed when nitric acid is applied to the gold film, while an adulterated film will produce a reaction,
- Can be holographically embossed to show that the gold film has not been modified,
- Can include patterned voids which increases the difficult of counterfeiting.

The above combination of effects cause the thin-film gold to posses unique and easily observable characteristics, thus making it difficult to either counterfeit or adulterate.

The PMTL uses a thin-film deposition of gold at a selected thickness which allows smaller amounts of metal to be used relative to chip gold. This allows the PMTL to be more versatile in situations of high inflation. For example, under some economic conditions where the price of gold rises, gold collectibles in quantities of 1 gram may become too expensive to be used for the purchase of artwork.

Currently, investors concerned with the possibility of inflation have been advised to buy gold and silver. However, currently there are spot shortages of small denomination coinage. Under hyper inflation conditions, such coinage would become very expensive and thus unavailable for everyday commerce. The PMTL allows day-to-day exchange in collectible gold artwork to be possible and reliable.

A current US dollar bill is 6.5 cm by 15.5 cm, which covers an area close to 100 square cm. In another embodiment, PMTL further includes indicia that can be applied to the precious metal, the substrate, or the protective layer.

If gold is deposited with a thickness of 260 nm onto a 100 square cm area, the area would encompass 1/20 gram of gold. Twenty of the PMTL thin-film gold laminates the size of a US dollar bill would produce a stack measuring approximately 2.5 mm. Thus, a 2.5 mm stack would consist of approximately 1 gram of gold.

The PMTL can be cut with scissors or other easily available means to provide needed value amounts for a given purpose. Thus, it can be used with more flexibility than chip or gold coins. Thin film gold, for example, could be deposited onto a substrate with holograms or other marks which would indicate the thickness of the thin-film gold and would include marks to guide the cutting of the film at set locations for a certain value of gold. The gold in the PMTL can also be easily and environmentally cleanly recovered by roasting (application of heat and oxygen). Thus this inventive form of thin film gold is very versatile.

These and other objects and advantages of the PMTL will become apparent from the subsequent detailed description of the preferred embodiment and the appended claims taken in conjunction with the accompanying drawings.

The present invention relates to a process for producing a precious metal thin-film laminate (PMTL), wherein said process comprises the following steps:
a) printing identifying information onto a holographically-embossed plastic substrate,
b) depositing 0.1 to 0.2 grams of gold by magnetron sputtering in a layer which averages 400 to 800 nm thick on the upper surface of the printed plastic substrate,
   wherein a substantially reflective strip of feathering having an optical density between 3 and 4 is substantially centered on the plastic substrate during the deposition step, and
c) applying a layer of plastic to the gold layer by adhesive lamination, wherein the resulting laminate contains 0.0032 to 0.0064 Troy Oz (0.1 to 0.2 gm) of gold a strip of feathering, and a hologram on one surface.

The present invention also relates to a process for producing a precious metal thin-film laminate (PTML), wherein said process comprises the following steps:
a) printing identifying information on a holographically-embossed plastic substrate,
b) depositing 0.2 to 0.5 grams of gold by magnetron sputtering in a layer which averages 800 to 2000 nm thick on the upper surface of the printed plastic substrate, wherein the magneton-sputtered layer has a substantially reflective strip of feathering including an optical density between 3 and 4; the feathered, magneton- sputtered layer is substantially centered on the plastic substrate during the deposition step,
   and
c) applying a layer of plastic to the gold layer by adhesive lamination to form a PMTL containing gold with an exemplary value of 0.0064 to 0.0161 Troy Oz (0.2 to 0.5 gm) of gold, a strip of feathering, and a hologram on one surface.

The invention also relates to a process for producing a precious metal thin-film laminate (PMTL), wherein said process comprises the following steps:
a) printing identifying information onto a holographically-embossed plastic substrate,
b) depositing 0.02 to 0.05 grams of gold by magnetron sputtering in a layer which averages 80 to 200 nm thick on the upper surface of the printed plastic substrate, wherein a strip of feathering is made on the edge of the plastic substrate during the deposition step, and
c) applying a layer of plastic to the gold layer by adhesive lamination, wherein the resulting laminate contains 0.0006 to 0.0016 Troy Oz (0.02 to 0.05 gm) of gold, an edge strip of feathering, and a hologram on one surface.

### BRIEF DESCRIPTION OF THE DRAWINGS

FIGURE 1 is an isometric view of a typical completed PMTL.
FIGURE 2 is a side elevational and cross-sectional view of the basic structure that comprises the PMTL showing the relative locations of a substrate, a precious metal and a protective layer.
FIGURE 3 is a side elevational and cross-sectional view of a PMTL that includes feathering and a plurality of surface marks.
FIGURE 4 is a side elevational and cross-sectional view of a PMTL that illustrates the configuration of the first and eleventh processes.
FIGURE 5 is a side elevational and cross-sectional view of a PMTL that illustrates the configuration of the second, third and fourth processes.
FIGURE 6 is a side elevational and cross-sectional view of a PMTL that illustrates the fifth process.
FIGURE 7 is a side elevational and cross-sectional view of a PMTL that illustrates the sixth process.
FIGURE 8 is a side elevational and cross-sectional view of a PMTL that illustrates the seventh, eighth, ninth and tenth processes.
FIGURE 9 is a side elevational and cross-sectional view of a PMTL that illustrates the twelfth and thirteenth processes.
FIGURE 10 is a side elevational and cross-sectional view of a PMTL that illustrates the fourteenth process.
FIGURE 11 is a side elevational and cross-sectional view of a PMTL that illustrates the fifteenth process.
FIGURE 12 is a side elevational and cross-sectional view of a PMTL that illustrates the sixteenth process.
FIGURE 13 is a side elevational and cross-sectional view of a PMTL that illustrates the seventeenth process.
FIGURE 14 is a side elevational and cross-sectional view of a PMTL that illustrates eighteenth process.
FIGURE 15 is a side elevational and cross-sectional view of a PMTL that illustrates the nineteenth and twentieth processes.
FIGURE 16 is a side elevational and cross-sectional view of a PMTL that illustrates the twenty-first process.
FIGURE 17 is a perspective view of a PMTL showing 1 gram of gold at "A", 1/10 gram of platinum at "B" and 10 grams of silver at "C".
FIGURE 18 is a top view of a PMTL.
FIGURE 19 is a side elevational, cross-sectional taken along the lines 19-19 of FIGURE 18.
FIGURE 20 diagrammatically illustrates a process for recording a PMTL for authentication.
FIGURE 21 diagrammatically illustrates a process of manufacture of a PMTL.

### BEST MODE FOR CARRYING OUT THE INVENTION

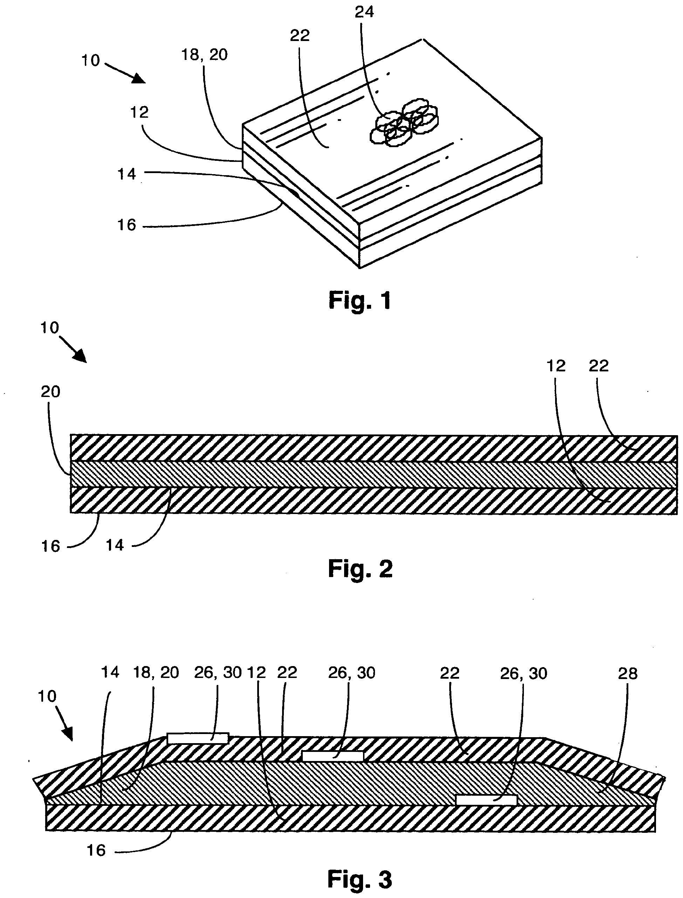

The best mode for carrying out the invention is presented in terms of a preferred embodiment for a precious metal thin-film laminate (PMTL) 10. The PMTL 10 can be utilized as material for collective art, traded and purchased or sold by individuals and commercial enterprises. The preferred embodiment of the PMTL 10 is disclosed in terms of a basic PMTL 10 structure and is shown in FIGURES 1-21.

The basic PMTL 10 structure, as shown in FIGURES 1-3 is comprised of a substrate 12 having an upper surface 14 and a lower surface 16. On to the upper surface 14 or the lower surface 16 is deposited a selectable quantity of a precious metal 18, and over the precious metal 18 is applied a protective layer 22.

To augment the basic PMTL 10 structure, the PMTL can further be comprised of indicia 24 and an authentication device 26. The indicia 24, as shown in FIGURE 1, can be applied to the precious metal 18, to the substrate 12 or to the protective layer 22. A typical represention of an authentication device 26 is shown in FIGURE 3.

The substrate 12 comprises a composition, including plastic film, metal foil and/or polymer. Non-limiting examples of the polymer include polystyrene, polyester (PET), acrylic (PMMA), polypropylene, polyethylene, poly-vinylidene dichloride (PVDC) and polyvinyl chloride (PVC).

In FIGURES 1-3 and FIGURE 17, precious metal 18,20 is adjacent to substrate 12. An example of where the precious metal 18 may be proximate includes having a decorative film (not shown) situated between the substrate 12 and the precious metal 18.

The precious metal 18, in certain embodiments, has a weight ranging from 0.001 g to 16 g. In another embodiment, the precious metal 18 has a weight ranging from 0.03 g to 12 g. In yet another embodiment, metal layer 14 has a weight ranging from 0.1 g to 8. g. Precious metal 18, in certain embodiments has a fractional troy ounce weight, i.e., a weight of less than one troy ounce.

The precious metal layer 18 generally has a thickness ranging from 10 to 1000 nm in certain embodiments. In other embodiments, the metal layer 18 can have a thickness ranging from 15 nm to 750 nm. In yet other embodiments, precious metal 18 has a thickness that is less than 500 nm. In yet another embodiment, precious metal 18 has a thickness ranging from a single metal-atom thickness to 500 nm.

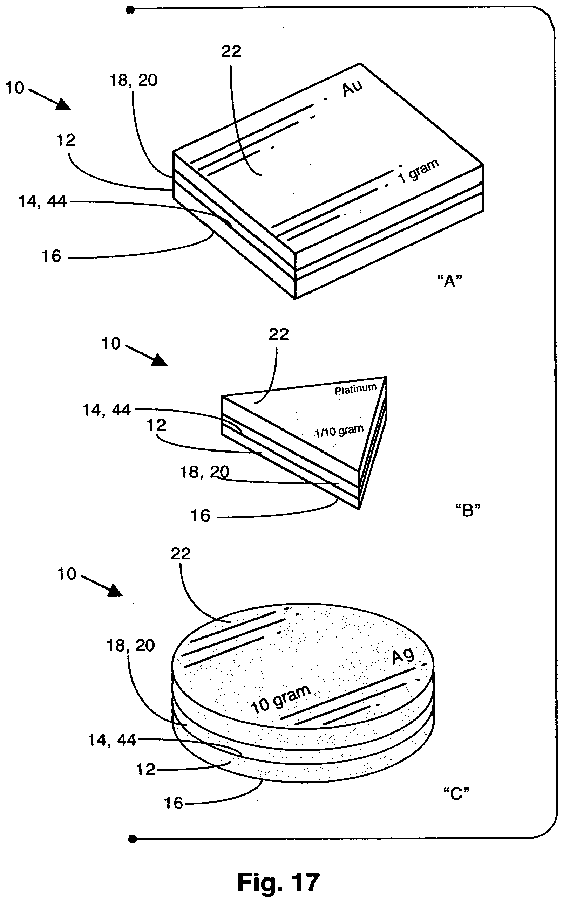

The substrate 12, in at least one embodiment has a rectangular shape, as shown in FIGURE 17A. However, other shapes may also be utilized, such as a triangular shape, as shown in FIGURE 17B, or a circular shape, as shown in FIGURE 17C.

In certain embodiments, the substrate 12 is dimensioned to be no less than 0.5 inches (1.27 cm) and no greater than 10 inches (25.4 cm). In another embodiment, the substrate 12 and/or the protective layer 22 are dimensioned to range from 3 to 8 inches (7.62 to 20.32 cm). In yet another embodiments, the substrate 12 can be transparent or translucent. In a further embodiment, the substrate 12 and/or the protective cover 22 include a dye or pigment in a quantity effective to provide color. Further, the color may be combined with the transparent or translucent substrate 12 to provide a colored, transparent or translucent substrate 12 through which precious metal 18 including designs proximate to precious metal 18 are visible to the unaided eye.

The precious metal 18 is comprised of a relatively high economic value composition comprising thin-film gold 20, silver, platinum, palladium, rhodium, osmium, iridium and ruthenium. Economic value may be indicated, in certain embodiments, by metals that are traded on commodity market exchanges. It should be understood that other relatively high economic value metals, in certain embodiments, include some non-limiting examples such as rhenium, copper, nickel, or strategic industrial metals, such as cobalt, titanium, or lanthanides. It is further understood that the precious metal 18 may include alloys of metals such as nickel and gold as used in 14-carat gold. It should be further understood, that the precious metal 18 can include other additives or contaminants such as oxides of meals, materials, a radio frequency identification device (RFID), and other components, particles, such as nanoparticles having relatively unique spectral properties, and other structures and materials without exceeding the scope and spirit of contemplated embodiments.

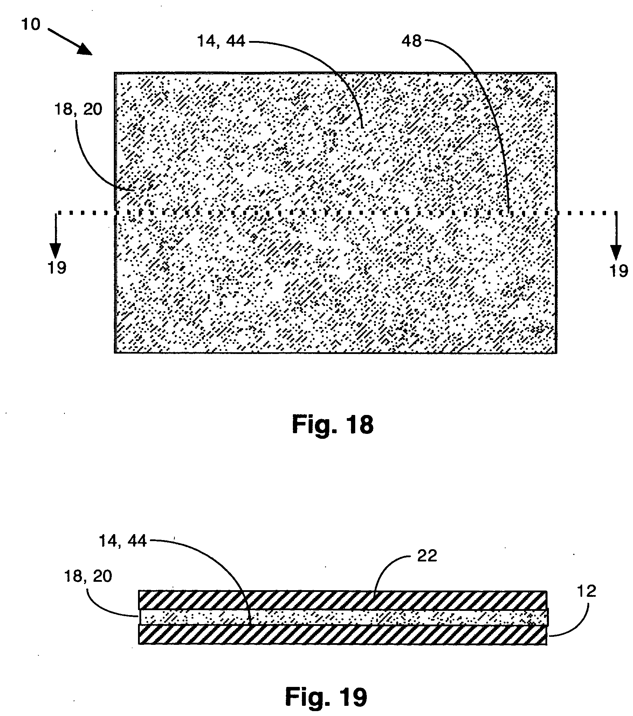

In another embodiment, as shown in FIGURES 18 and 19, a PMTL 10 is shown having a textured surface 44 such as a hologram, a diffraction grating, and/or an embossed groove and/or indicia 24, such as an embossment (not shown) stating the quantity of metal in the metal layer 22. The texture surface 44 may be disposed within or upon the precious metal 18. Optionally, the textured surface 44 may be either a textured film applied to plastic substrate 12, a precious metal 18, or a plastic cover 46. In other embodiments, texture is applied to or embedded within the plastic substrate 12 or the plastic cover 46. The textured surface 44 may provide one example of a predetermined anti-counterfeiting element for a value-bearing instrument 10. It should be understood that the textured surfaced 44 may be disposed within or upon metal layer 18 before, during, or after the application time period in which precious metal layer 18 is applied proximate to the substrate 12.

The protective layer 22 is comprised of a composition material including plastic film metal foil and polymer. Non-limiting example of the polymer includes polystyrene, polyester (PET), acrylic (PMMS), polypropylene, polyethylene, poly-vinylidene dichloride (PVDC) and polyvinyl chloride (PVC). The protective layer 22 is optional and is intended to provide protection to the precious metal 18 from adverse invironmental conditions that may alter the amount of metal contained in the precious metal 18 or damage the precious metal 18. Non-limiting examples of such environmental conditions include abrasion or the intentional removal of a portion of the metal.

The indicia 24, as shown in FIGURE 1, includes a micropattern, a serial number, a thin layer capable of transmitting visible light, a diffraction pattern device, a laser-etched element, and/or a lithographic element. In at least one embodiment, the indicia 24 includes at least one predetermined indicia 24. Non-limiting examples of predetermined indicia include a hologram; an embossed groove; a second metal present at relatively trace quantities; possibly as an alloy; an embedded fiber; a fluorescent dye coating; a spectral-shifting coating; an indicator of the type of precious metal 18; a serial number; particles, such as nanoparticles having relatively unique spectral properties; a predetermined feathering strip having an optical density ranging from 1 to 4; or a mark regarding the quantity of precious metal 18.

In yet another embodiment, the indicia 24 includes at least one random indicia. Non-limiting examples of random indicia include a random set of apertures, a set of blind holes, an unpatterned thickness variation of the precious metal, a convoluted optical density configuration, a microdamage element, such as a contaminant distribution arrangement and/or depressions or bas-relief surfaces. The random indicia 24 may be suitable for characterizing either the precious metal 18 and/or a value-bearing instrument. It is further understood that random indicia, in certain embodiments, include unpatterned configurations, unreproducible configurations, unrepeatable configurations, and statistically pseudo-random configurations in addition to statistically random configurations. In yet another embodiment, the indicia 24 includes, in combination, a predetermined indicia and a random indicia so as to be effective as an anti-counterfeiting element.

Referring to FIGURES 1, 2 and 3, the PMTL 10 includes a substrate 12, a precious metal layer 18, and an optional protective layer 22. Embossed on either precious metal layer 18 or the protective layer 22 is indicia 24 that can be designed to indicate the weight of the precious metal layer 18, the type of metal in precious metal layer 18.

Referring to FIGURES 18 and 19, the PMTL 10 is illustrated respectively in a top view and in a corresponding cross-sectional view. The metal layer 18 may have a thickness gradient, in at least one embodiment, such as a random feathering 28 of the metal thickness, particularly near the periphery of the plastic substrate 12 or the metal layer 18. In at least one embodiment, the thickness decreases monotonically as the layer is disposed further from a central axis 48, as shown in FIGURE 18. In another embodiment, the thickness of the metal layer 18 varies in a predetermined pattern, such as a grid. In another embodiment, the thickness of the metal layer 18 has a thickness gradient along the central axis 48 and an axis transverse to the central axis 48. It is understood that the gradient may consist of a monotonically decreasing gradient. The gradient may also have a curvilinear decreasing function away from the central axis 48, or a monotonically increasing function away from the central axis 48, or any other nonlinear function with one or more maximum heights.

The PMTL 10 authentication device 26 in at least one embodiment includes a destructive testing device. Non-limiting examples of destructive testing devices which involve breaching the substrate 12 or the protective cover 22, a spark spectrophotometer; or an electrical resistance meter.

In another embodiment, the authentication device 26 is comprised of a nondestructive testing device. In certain embodiments, the non-destructive testing device 26 is capable of non-destructively assaying an assayable precious metal. Non-limiting examples of the nondestructive testing device 26 are a transmission or reflection spectrophotometer; a microwave spectrophotometer; a millimeter wave spectrophotometer; an eddy current meter; an electrical resistance meter; an infrared reflectometer;, an x-ray fluorescence spectrometer; an ultraviolet light emitting diode capable of detecting UV-fluorescing yellow dyes, a narrow band filters capable of inducing metamerism in dyes; a colorimeter; a graphic copying device, such as a digital camera; an image recording device, and/or a scanning device, such as a copying scanner.A

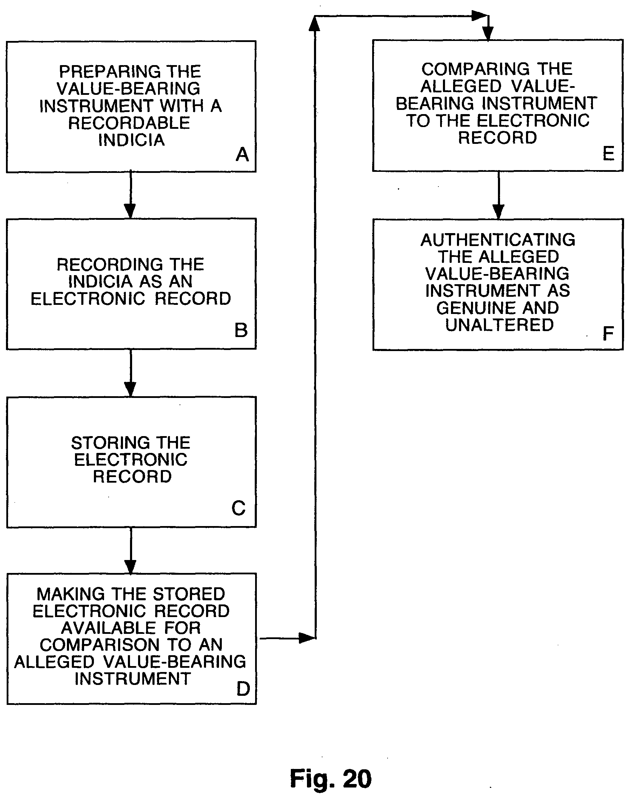

To assist in the verification of authenticity of a value-bearing instrument 10, the indicia 24 and/or combinations of indicia may be recorded, such as by an optical scanner or a spectrometer, at an initial time period associated with manufacture or distribution for comparison at a later time period. The steps of the method recording of the value-bearing instrument 10, as shown in FIGURE 20, in at least one embodiment, include the steps of:
A. Preparing the value-bearing instrument 10 with a recordable indicia 24:
B. Recording the indicia as an electronic record;
C. Storing the electronic record;
D. Making the stored electronic record available for comparison to an alleged value-bearing instrument;
E. Comparing the alleged value-bearing instrument to the electronic record in step B; and
F. Authenticating that the alleged value-bearing instrument as genuine and unaltered or as a counterfeit or an altered value-bearing instrument.

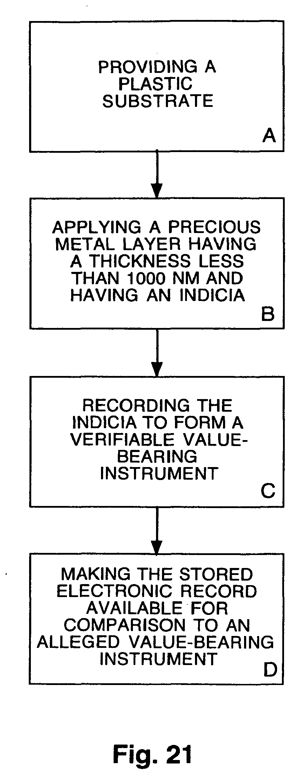

In at least one embodiment, as illustrated in FIGURE 21, manufacture of the value-bearing instrument 10, in at least one embodiment, may include the steps of:
A. Providing a plastic substrate;
B. Applying a precious metal layer 18 having a thickness less than 1000 nm proximate to the plastic substrate and having a metal content ranging from 0.1 to 16 grams, wherein the precious metal layer forms an indicia; and
C. Recording the indicia to form a verifiable value-bearing instrument.

It is understood that the electronic record and./or the recorded indicia may be recorded publicly, held privately, or made available using a system of encryption with public and private keys. Making the electronic record and/or recorded indicia available, in certain embodiments, may include broadcasting or narrowcast using media such as the internet and other electronic networks.

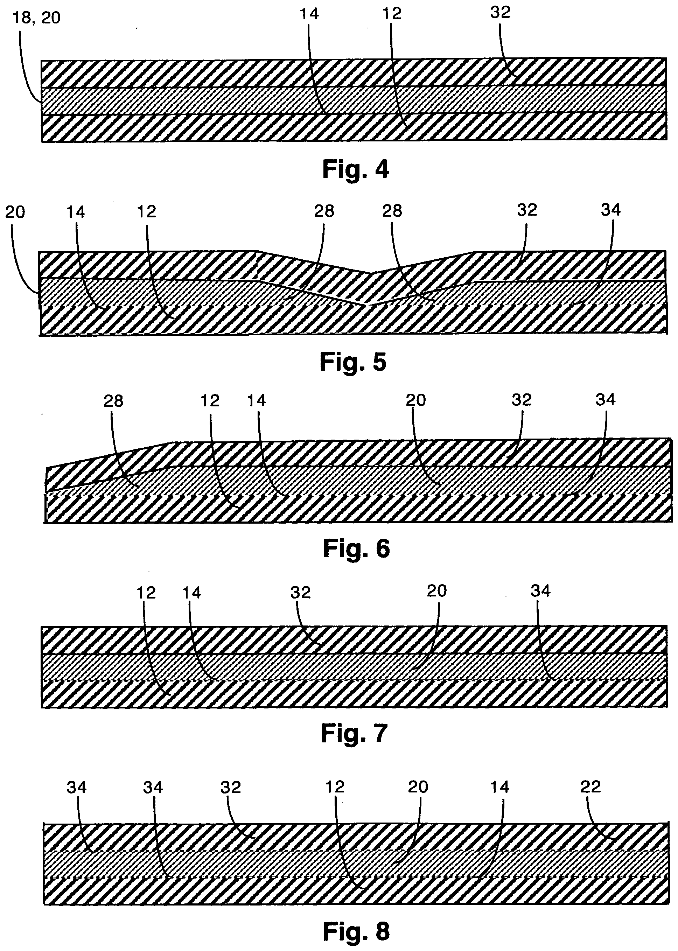

Exemplary processes for producing the PMTL 10 are presented in terms of twenty-one exemplary processes that are shown in FIGURES 4-16.

The first process embodiment for laminating gold 20 as an example of the PMTL, as shown in FIGURE 4, comprises the following steps:
1. Printing identifying information onto a substrate 12;
2. Depositing 0.1 to 0.2 grams of gold 20 by magnetron sputtering in a layer which averages 400 to 800 nm thick on the upper surface 14 of the printed substrate 12; and
3. Applying a layer of plastic 32 to the gold layer 20 by adhesive lamination to form the PMTL, the resulting laminate contains 0.0032 to 0.0064 Troy Oz (0.1 to 0.2 gm) of gold.

The second process embodiment, as shown in FIGURE 5, comprises the following steps for analyzing the purity of gold 20 on substrate 12:
1. Printing identifying information onto a holographically-embossed substrate 12;
2. Depositing 0.1 to 0.2 grams of gold 20 by magnetron sputtering in a layer which averages 400 to 800 nm thick on the upper surface of the printed plastic substrate 12, wherein a substantially reflective strip of feathering 28 having an optical density between 3 and 4 is substantially centered on the plastic substrate during the deposition step, and
3. Applying a layer of plastic to the gold layer by adhesive lamination, wherein the resulting laminate contains 0.0032 to 0.0064 Troy Oz (0.1 to 0.2 gm) of gold, a strip of feathering, and a hologram on one surface.

The third process embodiment for manufacturing the PMTL having, in combination, three indicia: information on the precious metal 18, and the hologram and the strip of feathering situated on the substrate 12, as shown in FIGURE 5, comprises the following steps:
1. Depositing 0.05 to 0.10 grams of gold 20 by magnetron sputtering in a layer which averages 200 to 400 nm thick on the upper surface 14 of a holographically-embossed substrate 12, wherein a strip of feathering 28 having an optical density between 1 to 3 is substantially centered on the plastic substrate during the deposition;
2. Printing identifying information onto the gold layer 20, and
3. Applying a layer of plastic 32 to the gold layer 20 by adhesive lamination contains 0.0016 to 0.0032 Troy Oz (0.05 to 0.10 gm) of gold, a strip of feathering and a hologram on one surface.

The fourth process embodiment for manufacturing the PMTL having, in combination, three indicia: information on the hologram, and the strip of feathering situated on the substrate 12, as shown in FIGURE 5, comprises the following steps:
1. Printing identifying information onto a holographically-embossed plastic substrate 12;
2. Depositing 0.2 to 0.5 grams of gold 20 by magnetron sputtering in a layer which averages 800 to 2000 nm thick on the upper surface 14 of the printed plastic substrate 12, wherein the magnetron-sputtered layer has a substantially reflective strip of feathering 28 including an optical density between 3 and 4; the feathered, magnetron-sputtered layer is substantially centered on the plastic substrate 12 during the deposition step; and
3. Applying a layer of plastic 32 to the gold layer 20 by adhesive lamination to form a PMTL containing gold with an exemplary value of 0.0064 to 0.0161 Troy Oz (0.2 to 0.5 gm), a strip of feathering 28, and a hologram 34 on one surface.

The fifth process embodiment, as shown in FIGURE 6, comprises the following steps:
1. Printing identifying information onto a holographically-embossed plastic substrate 12,
2. Depositing 0.02 to 0.05 grams of gold 20 by magnetron sputtering in a layer which averages 80 to 200 nm thick on the upper surface 14 of the printed plastic substrate 12, wherein a strip of feathering 28 is made on the edge of the plastic substrate 12 during the deposition step, and
3. Applying a layer of plastic 32 to the gold layer 20 by adhesive lamination, wherein the resulting laminate contains 0.0006 to 0.0016 Troy Oz (0.02 to 0.05 gm) of gold, an edge strip of feathering 28, and a hologram 34 on one surface.

The sixth process embodiment, as shown in FIGURE 7, comprises the following steps:
1. Printing identifying information onto a holographically-embossed plastic substrate 12,
2. Depositing 0.01 to 0.02 grams of gold 20 by magnetron sputtering in a layer 40 to 80 nm thick on the upper surface 14 of the printed plastic substrate 12, and
3. Applying a layer of plastic 32 to the gold layer 20 by adhesive lamination, wherein the resulting laminate contains 0.0003 to 0.0006 Troy Oz (0.01 to 0.02 gm) of gold and a hologram 34 on one surface.

The seventh process embodiment, as shown in FIGURE 8, comprises the following steps:
1. Depositing 0.05 to 0.1 grams of gold 20 by magnetron sputtering in a layer which averages 200 to 400 nm thick on the upper surface 14 of a holographically-embossed plastic substrate 12,
2. Laminating two gold-coated plastic sheets together, with the gold layers 20 attached by adhesive lamination, thereby creating a laminate that contains a total of 0.1 to 0.2 grams of gold, and
3. Printing identifying information onto the holographically-embossed plastic 32 and gold laminate 20, wherein the resulting laminate contains 0.0032 to 0.0064 Troy Oz (0.01 to 0.2 gm) of gold, and a hologram 34 on one surface.

The eighth process embodiment, as shown in FIGURE 8, comprises the following steps:
1. Electroplating 0.25 to 0.50 grams of gold 20 in a layer 1000 to 20000 nm thick on the upper surface 14 of a holographically-embossed plastic substrate 12,
2. Laminating two gold-coated, holographically-embossed plastic sheets 32 together, with the gold layers 20 adjacent, by pressure and heat, thereby creating a laminate that contains a total of 0.5 to 1.0 grams of gold, and
3. Printing identifying information onto the holographically-embossed plastic and gold laminate, wherein the resulting laminate contains 0.0161 to 0.0322 Troy Oz (0.5 to 1.0 gm) of gold and a hologram 34 on one surface.

The ninth process embodiment, as shown in FIGURE 8, comprises the following steps:
1. Print identifying information onto a holographically-embossed plastic substrate 12,
2. Depositing 0.5 to 1.0 grams of gold 20 by colloidal gold deposition in a layer 2100 nm thick on the upper surface 14 of the printed plastic substrate 12,
3. Removing the colloidal suspension liquid by heat or vacuum, followed by densification by heat or pressure if needed, and
4. Laminating two gold-coated plastic sheets together, with the gold layers 20 adjacent, by pressure and heat, thereby creating a layer that contains total of 1 to 2 gram of gold, wherein the resulting laminate contains 0.0322 to 0.0643 Troy Oz (1 to 2 gm) of gold and a hologram 34 on both surfaces.

The tenth process embodiment, as shown in FIGURE 8, comprises the following steps:
1. Printing identifying information onto a holographically-embossed plastic substrate 12,
2. Depositing 0.5 to 1.0 grams of gold 20 by colloidal gold deposition with a binder in a layer 2000 to 4000 nm thick on the upper surface 14 of the printed plastic substrate 12, and
3. Laminating two gold-coated plastic sheets together, with the gold layers 20 adjacent, by pressure adhesive and/or heat, thereby creating a laminate that contains a total of 1 to 2 gram of gold, wherein the resulting laminate contains 0.0322 to 00643 Troy Oz (1 to 2 gm) of gold and a hologram 34 on both surfaces.

The eleventh process embodiment, as shown in FIGURE 4, comprises the following steps:
1. Printing identifying information onto a plastic substrate 12,
2. Adhesive laminate 2.0 to 5.0 grams of gold foil 20 or gold leaf 20 in a layer 8000 to 20000 nm thick on the upper surface 14 of the printed plastic substrate 12, and
3. Applying a layer of plastic 32 to the gold layer 20 by adhesive lamination, wherein the resulting laminate contains 0.0643 to 0.1608 Troy Oz (2 to 5 gm) of gold.

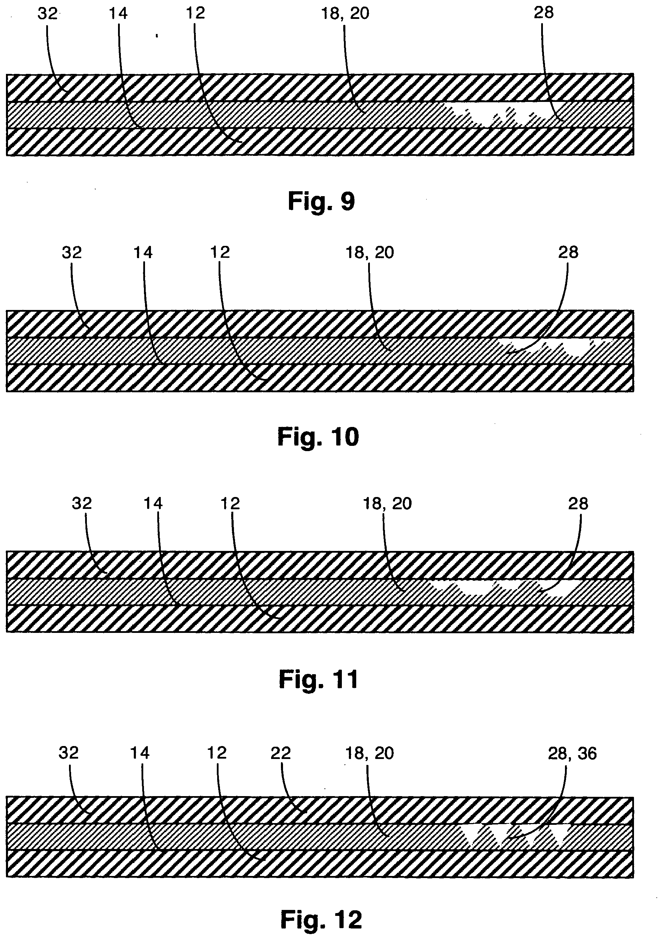

The twelfth process embodiment, as shown in FIGURE 9, comprises the following steps:
1. Printing identifying information on a plastic substrate 12,
2. Depositing 0.1 to 0.2 grams of gold 20 by magnetron sputtering in a layer which averages 400 to 800 nm thick on the upper surface 14 of the printed plastic substrate 12,
3. Placing a heat resistant object during deposition between the sputtering target and the plastic substrate 12, causing a shadow in the gold deposition, and
4. Covering the gold layer 20 with a layer of plastic 32 by adhesive lamination, wherein the resulting laminate contains 0.0032 to 0.0064 Troy Oz (0.1 to 0.2 gm) of gold and a feathered shadow 28 of the metal object.

The thirteenth process embodiment, as shown in FIGURE 9, comprises the following steps:
1. Printing identifying information onto a plastic substrate 12,
2. Depositing 0.1 to 0.2 grams of gold 20 by magnetron sputtering in a layer which averages 400 to 800 nm thick on top of the printed plastic substrate 12,
3. Placing a randomly moving heat resistant object during deposition between the sputtering target and the plastic substrate 12, causing a randomly generated shadow in the gold deposition, and
4. Covering the gold layer 20 by a layer of plastic 32 by adhesive lamination, wherein the resulting laminate contains 0.0032 to 0.0064 Troy Oz (0.1 to 0.2 gm) of gold and a random feathered shadow 28 of the metal object.

The fourteenth process embodiment, as shown in FIGURE 10, comprises the following steps:
1. Printing identifying information onto a plastic substrate 12,
2. Spraying a portion of the substrate 12 with droplets of an oil or ink that will evaporate in vacuum,
3. Depositing 0.1 to 02 grams of gold 20 by magnetron sputtering in a layer which averages 400 to 800 nm thick on the upper surface 14 of the printed plastic substrate 12, and
4. Covering the gold layer 20 with a layer of plastic 32 by adhesive lamination, wherein the resulting laminate contains 0.0032 to 0.0064 Troy Oz (0.1 to 0.2 gm) of gold and feathered shadows 28 at the locations of the oil or ink droplets.

The fifteenth process embodiment, as shown in FIGURE 11, comprises the following steps:
1. Printing identifying information onto a plastic substrate 12,
2. Printing a portion of the substrate 12 with an oil or ink that will evaporate in vacuum,
3. Depositing 0.1 to 0.2 grams of gold 20 by magnetron sputtering in a layer which averages 400 to 800 nm thick on the upper surface 14 of the printed plastic substrate 12, and
4. Covering the gold layer 20 with a layer of plastic 32 by adhesive lamination, wherein the resulting laminate contains 0.0032 to 0.0064 Troy Oz (0.1 to 0.2 gm) of gold and a feathered shadows 28 at the locations of the printing.

The sixteenth process embodiment, as shown in FIGURE 12, comprises the following steps:
1. Printing identifying information onto a plastic substrate 12,
2. Printing a portion of the substrate 12 with an oil or ink that will evaporate in vacuum in a pattern that will result in the creation of an antenna structure 36,
3. Depositing 0.1 to 0.2 grams of gold 20 by magnetron sputtering in a layer which averages 400 to 800 nm thick on the upper surface of the printed plastic substrate 12, and
4. Covering the gold layer 20 with a layer of plastic 32 by adhesive lamination, wherein the resulting laminate contains 0.0032 to 0.0064 Troy Oz (0.1 to 0.2 gm) of gold and an antenna 36 with feathered edges 28.

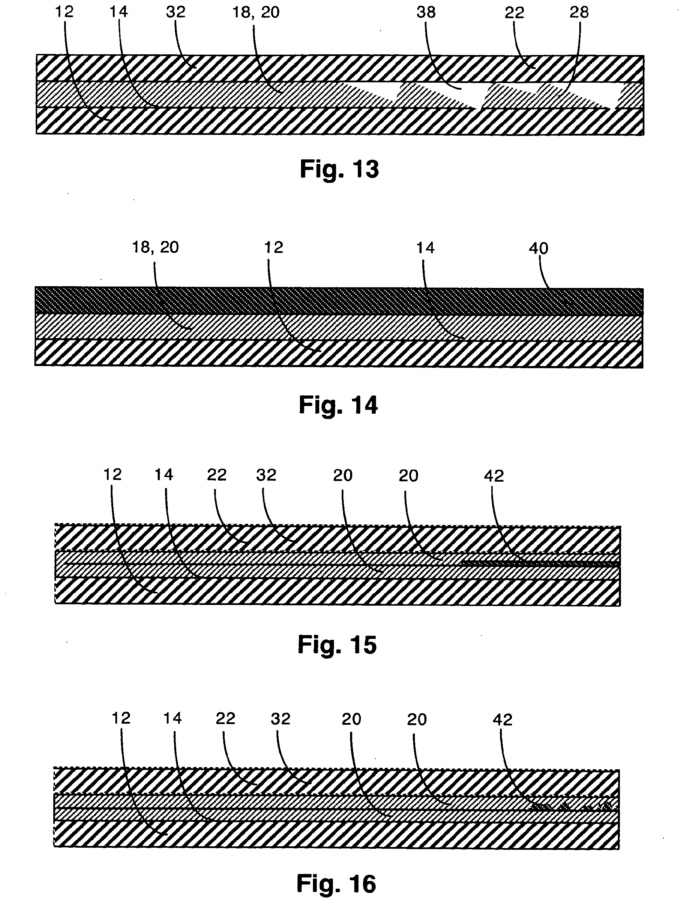

The seventeenth process embodiment, as shown in FIGURE 13, comprises the following steps:
1. Printing identifying information onto a plastic substrate 12,
2. Depositing 0.1 to 0.2 grams of gold 20 by magnetron sputtering in a layer which averages 400 to 800 nm thick on the upper surface 14 of the printed plastic substrate 12,
3. Randomly apply scratches 38 at an oblique angle to one section of the gold layer 20, and
4. Covering the gold layer 20 with a layer of plastic 32 by adhesive lamination, wherein the resulting laminate contains 0.0032 to 0.0064 Troy Oz (0.1 to 0.2 gm) of gold and random scratches 38 which are feathered 28.

The eighteenth process embodiment, as shown in FIGURE 14, comprises the following steps:
1. Printing identifying information onto a plastic substrate 12,
2. Depositing 0.1 to 0.2 grams of gold 20 by magnetron sputtering in a layer which averages 400 to 800 nm thick on the upper surface of the printed plastic substrate 12, and
3. Covering the gold layer 20 with a coating of lacquer 40, wherein the resulting laminate contains 0.0032 to 0.0064 Troy Oz (0.1 to 0.2 gm) of gold and a protective layer of lacquer 40.

The nineteenth process embodiment, as shown in FIGURE 15, comprises the following steps:
1. Printing identifying information onto a plastic substrate 12,
2. Depositing 0.09 to 0.19 grams of gold 20 by magnetron sputtering in a layer which averages 360 to 760 nm thick on the upper surface of the printed plastic substrate 12,
3. Printing a dielectric material 42 on a portion of the gold coated substrate 12 with the thickness of the dielectric material 42 having a 1/4 to 6/4 quarter wave optical thickness and adjusted to produce intense colors in reflection,
4. Depositing 0.01 grams of gold by magnetron sputtering in a layer which averages 40 nm thick on the upper surface of the printed plastic substrate 12, and
5. Covering the gold layer 20 with a layer of plastic 32 by adhesive lamination, wherein the resulting laminate contains 0.0032 to 0.0064 Troy Oz (0.1 to 0.2 gm) of gold and a colored area in reflection.

The twentieth process embodiment, as shown in FIGURE 15, comprises the following steps:
1. Printing identifying information onto a plastic substrate 12,
2. Depositing 0.09 to 0.19 grams of gold 20 by magnetron sputtering in a layer which averages 360 to 760 nm thick on the upper surface of the printed plastic substrate 12,
3. Printing a dielectric material 42 onto a portion of the gold coated substrate 12 with the thickness of the dielectric material 42 having a 1/4 to 6/4 quarter wave optical thickness and adjusted to produce intense colors in reflection,
4. Depositing 0.01 grams of gold 20 by magnetron sputtering in a layer which averages 40 nm thick on the upper surface of the printed plastic substrate 12, and
5. Covering the gold layer 20 with a layer of plastic 32 by adhesive lamination, wherein the resulting laminate contains 0.0032 to 0.0064 Troy Oz (0.1 to 0.2 gm) of gold and a colored area in reflection.

The twenty-first process embodiment, as shown in FIGURE 16, comprises the following steps:
1. Printing identifying information onto a plastic substrate 12,
2. Depositing 0.09 to 0.19 grams of gold 20 by magnetron sputtering in a layer which averages 360 to 760 nm thick on the upper surface of the printed plastic substrate 12,
3. Randomly deposit a dielectric material 42 on a portion of the gold coated substrate 12 with the thickness of the dielectric material 42 having a 1/4 to 6/4 quarter wave optical thickness and adjusted to produce intense colors in reflection,
4. Depositing 0.01 grams of gold 20 by magnetron sputtering in a layer which averages 42 nm thick on the upper surface of the printed plastic substrate 12, and
5. Covering the gold layer 20 with a layer of plastic 32 by adhesive lamination, wherein the resulting laminate contains 0.0032 to 0.0064 Troy Oz (0.1 to 0.2 gm) of gold and a randomly colored area in reflection.

The value-bearing instrument 10 can also be comprised of a plastic substrate 12 having peripheral edges, a first axis therebetween, and a first precious metal layer 18 proximate to the substrate 12. The metal layer 18 has a metal content ranging from 0.001 grams to 16 grams, a predetermined indicia and a randomly disposed indicia. The indicia is selected from the group consisting of a spectral combination, a three-dimensioned indicia, and an aperture pattern. The precious metal layer 18 is a physical-vapor-deposition-applied precious metal layer.

The metal content is a variable metal content that is disposed between the first axis and at least one peripheral edge. The variable metal content is a minimum metal content that is proximate to the peripheral edge and can also consist of a non-destructively assayable metal content. The precious metal layer 20 has a thickness ranging from 10 nm to 1000 nm.

The value-bearing instrument can be further comprised of a second precious metal layer 18 that is proximate to the first precious metal layer and can include a substrate 12 having peripheral edges; and a metal layer proximate to the substrate 12. The metal layer has a metal content of less than a troy ounce and a thickness that is less than 1000 nm. The metal layer is selected from the group consisting of a vapor-deposited precious metal layer, an atomically-layered precious metal layer, a foil precious metal layer and a magnetron-sputtered precious metal layer. The metal layer can also be selected from gold, platinum, palladium, rhodium or silver.

An additional method for making a value-bearing instrument 10 comprises the steps of providing a plastic substrate 12, applying a precious metal layer 18 having a thickness less than 1000 nm and that is proximate to the plastic substrate 12. The metal layer 18 can have a metal content ranging from 0.001 to 16 grams, and can include indicia that is recorded to form a validation of a value-bearing instrument 10. The indicia can be comprised of a plurality of thicknesses forming a convoluted optical density configuration, and can be recorded publicly.

## Claims

1. Process for producing a precious metal thin-film laminate (PMTL), wherein said process comprises the following steps:
a) printing identifying information onto a holographically-embossed plastic substrate,
b) depositing 0.1 to 0.2 grams of gold by magnetron sputtering in a layer which averages 400 to 800 nm thick on the upper surface of the printed plastic substrate,
wherein a reflective strip of feathering having an optical density between 3 and 4 is centered on the plastic substrate during the deposition step, and
c) applying a layer of plastic to the gold layer by adhesive lamination, wherein the resulting laminate contains 0.0032 to 0.0064 Troy Oz (0.1 to 0.2 gm) of gold, a strip of feathering, and a hologram on one surface.

2. Process for producing a precious metal thin-film laminate (PTML), wherein said process comprises the following steps:
a) printing identifying information on a holographically-embossed plastic substrate,
b) depositing 0.2 to 0.5 grams of gold by magnetron sputtering in a layer which averages 800 to 2000 nm thick on the upper surface of the printed plastic substrate, wherein the magneton-sputtered layer has a reflective strip of feathering including an optical density between 3 and 4; the feathered, magneton- sputtered layer is centered on the plastic substrate during the deposition step,
and
c) applying a layer of plastic to the gold layer by adhesive lamination to form a PMTL containing gold with an exemplary value of 0.0064 to 0.0161 Troy Oz (0.2 to 0.5 gm) of gold, a strip of feathering, and a hologram on one surface.

3. Process for producing a precious metal thin-film laminate (PMTL), wherein said process comprises the following steps:
a) printing identifying information onto a holographically-embossed plastic substrate,
b) depositing 0.02 to 0.05 grams of gold by magnetron sputtering in a layer which averages 80 to 200 nm thick on the upper surface of the printed plastic substrate, wherein a strip of feathering is made on the edge of the plastic substrate during the deposition step, and
c) applying a layer of plastic to the gold layer by adhesive lamination, wherein the resulting laminate contains 0.0006 to 0.0016 Troy Oz (0.02 to 0.05 gm) of gold, an edge strip of feathering, and a hologram on one surface.

## Patentansprüche

1. Verfahren zur Herstellung eines Edelmetall-Dünnschichtlaminats (PTML), wobei das Verfahren folgende Schritte umfasst:
a) Drucken von identifizerenden Informationen auf einem holographisch geprägten Kunststoffsubstrat,
b) Abscheiden von 0,1 - 0,2 g Gold durch Magnetron-Sputtern in einer Schicht, die durchschnittlich 400 - 800 nm dick ist, auf der Oberseite des bedruckten Kunststoffsubstrats, wobei ein reflektiver Streifen mit abgeschrägter Kante mit einer optischen Dichte zwischen 3 und 4 beim Abscheidungsschritt auf dem Kunststoffsubstrat zentriert wird und
c) Auftragen einer Kunststoffschicht auf der Goldschicht durch Klebekaschierung, wobei das resultierende Laminat 0,0032 - 0,0064 Troy-Unze (0,1 - 0,2 g) Gold, einen Streifen mit abgeschrägter Kante und ein Hologramm auf einer Oberfläche enthält.

2. Verfahren zur Herstellung eines Edelmetall-Dünnschichtlaminats (PTML), wobei das Verfahren folgende Schritte umfasst:
a) Drucken von identifizerenden Informationen auf einem holographisch geprägten Kunststoffsubstrat,
b) Abscheiden von 0,2 - 0,5 g Gold durch Magnetron-Sputtern in einer Schicht, die durchschnittlich 800 - 2000 nm dick ist, auf der Oberseite des bedruckten Kunststoffsubstrats, wobei die Magneton-Sputterschicht einen reflektiven Streifen mit abgeschrägter Kante mit einer optischen Dichte zwischen 3 und 4 aufweist, die Magneton-Sputterschicht mit abgeschrägter Kante beim Abscheidungsschritt auf dem Kunststoffsubstrat zentriert wird und
c) Auftragen einer Kunststoffschicht auf der Goldschicht durch Klebekaschierung, um ein PMTL zu bilden, das Gold mit einem exemplarischen Wert von 0,0064 - 0,0161 Troy-Unze (0,2 - 0,5 g) Gold, einen Streifen mit abgeschrägter Kante und ein Hologramm auf einer Oberfläche enthält.

3. Verfahren zur Herstellung eines Edelmetall-Dünnschichtlaminats (PTML), wobei das Verfahren folgende Schritte umfasst:
a) Drucken von identifizerenden Informationen auf einem holographisch geprägten Kunststoffsubstrat,
b) Abscheiden von 0,02 - 0,05 g Gold durch Magnetron-Sputtern in einer Schicht, die durchschnittlich 80 - 200 nm dick ist, auf der Oberseite des bedruckten Kunststoffsubstrats, wobei ein Streifen mit abgeschrägter Kante beim Abscheidungsschritt am Rand des Kunststoffsubstrats hergestellt wird und
c) Auftragen einer Kunststoffschicht auf der Goldschicht durch Klebekaschierung, wobei das resultierende Laminat 0,0006 - 0,0016 Troy-Unze (0,02 - 0,05 g) Gold, einen Streifen mit abgeschrägter Kante am Rand und ein Hologramm auf einer Oberfläche enthält.

## Revendications

1. Procédé de production d'un stratifié de couche mince de métal précieux (PMTL), ledit procédé comprenant les étapes suivantes :
a) imprimer des informations d'identification sur un substrat en matière plastique gaufré par procédé holographique,
b) déposer de 0,1 à 0,2 gramme d'or par pulvérisation cathodique magnétron en une couche d'épaisseur moyenne de 400 à 800 nm sur la surface supérieure du substrat en matière plastique imprimé, une bande réfléchissante à biseau ayant une densité optique entre 3 et 4 étant centrée sur le substrat en matière plastique pendant l'étape de dépôt, et
c) appliquer une couche de matière plastique à la couche d'or par stratification adhésive, le stratifié résultant contenant de 0,0032 à 0,0064 once troy (de 0,1 à 0,2 g) d'or, une bande à biseau et un hologramme sur une surface.

2. Procédé de production d'un stratifié de couche mince de métal précieux (PMTL), ledit procédé comprenant les étapes suivantes :
a) imprimer des informations d'identification sur un substrat en matière plastique gaufré par procédé holographique,
b) déposer de 0,2 à 0,5 gramme d'or par pulvérisation cathodique magnétron en une couche d'épaisseur moyenne de 800 à 2000 nm sur la surface supérieure du substrat en matière plastique imprimé, la couche déposée par pulvérisation cathodique magnétron ayant une bande réfléchissante à biseau comprenant une densité optique entre 3 et 4 ; la couche à biseau, déposée par pulvérisation cathodique magnétron, est centrée sur le substrat en matière plastique pendant l'étape de dépôt, et
c) appliquer une couche de matière plastique à la couche d'or par stratification adhésive pour former un PMTL contenant de l'or ayant une valeur à titre d'exemple de 0,0064 à 0,0161 once troy (de 0,2 à 0,5 g) d'or, une bande à biseau et un hologramme sur une surface.

3. Procédé de production d'un stratifié de couche mince de métal précieux (PMTL), ledit procédé comprenant les étapes suivantes :
a) imprimer des informations d'identification sur un substrat en matière plastique gaufré par procédé holographique,
b) déposer de 0,02 à 0,05 gramme d'or par pulvérisation cathodique magnétron en une couche d'épaisseur moyenne de 80 à 200 nm sur la surface supérieure du substrat en matière plastique imprimé, une bande à biseau étant réalisée sur le bord du substrat en matière plastique pendant l'étape de dépôt, et
c) appliquer une couche de matière plastique à la couche d'or par stratification adhésive, le stratifié résultant contenant de 0,0006 à 0,0016 once troy (de 0,02 à 0,05 g) d'or, une bande à biseau sur le bord et un hologramme sur une surface.
